# EUROPÄISCHE PATENTSCHRIFT

(11) **EP 2 923 122 B1**
(45) Veröffentlichungstag und Bekanntmachung des Hinweises auf die Patenterteilung: **17.10.2018**
(21) Anmeldenummer: 13814010.8
(22) Anmeldetag: 22.11.2013
(51) Int. Cl.: F02F 3/00, F16J 1/16

(54) **KOLBEN FÜR EINEN VERBRENNUNGSMOTOR**
PISTON FOR AN INTERNAL COMBUSTION ENGINE
PISTON POUR MOTEUR À COMBUSTION INTERNE

(30) Priorität: 23.11.2012 DE 102012022913
(43) Veröffentlichungstag der Anmeldung: 30.09.2015
(73) Patentinhaber: MAHLE International GmbH, 70376 Stuttgart (DE)
(72) Erfinder: ISSLER, Wolfgang, D-71409 Schwaikheim (DE)
(74) Vertreter: BRP Renaud & Partner mbB Rechtsanwälte Patentanwälte Steuerberater
(86) Internationale Anmeldenummer: PCT/DE2013/000688
(87) Internationale Veröffentlichungsnummer: WO 2014/079406

(56) Entgegenhaltungen:
- WO-A1-2013/131939
- DE-A1- 4 327 772
- DE-A1-102011 103 105
- DE-C1- 3 609 019
- US-A- 5 746 169

## Beschreibung

Die Erfindung betrifft einen Kolben für einen Verbrennungsmotor mit einem Kolbenboden, an den sich radial außen in kolbenbodenabgewandte Richtung eine Ringpartie anschließt, mit zwei einander gegenüberliegenden und in kolbenbodenabgewandte Richtung an den Kolbenboden angeformten Bolzennaben mit je einer Bolzenbohrung und mit einem die Bolzennaben miteinander verbindenden Kolbenschaft.
Ein Kolben der eingangs genannten Art ist aus der Japanischen Anmeldung
JP 62184274 A bekannt. Der bekannte Kolben weist Bolzenbohrungen auf, in die radial innen über den gesamten Umfang der Innenfläche der Bolzenbohrungen umlaufende Eindrehungen eingeformt sind. Erreicht wird hierdurch, dass bei einer Verformung des Kolbenbolzens unter Last der Kontaktbereich zwischen dem Kolbenbolzen und den radial inneren Kanten der Bolzenbohrungen vergrößert wird, sodass dadurch die Gefahr reduziert wird, dass der Kolbenbolzen und der Kolben im Bereich der radial inneren Kanten der Bolzenbohrungen beschädigt werden. Ein ähnlicher Kolben ist auch aus US 5 746 169 A bekannt. Nachteilig ist hierbei, dass dadurch die im Zenitbereich der Bolzenbohrung liegende Kontaktfläche zwischen der Bolzenbohrung und dem darin befindlichen Kolbenbolzen reduziert wird, sodass der vom Zenit der Bolzenbohrung auf den Kolbenbolzen ausgeübte Druck pro Kontaktfläche insbesondere beim Verdichtungs- und Arbeitstakt des Motors, in dem der Kolben eingebaut ist, sehr groß wird, was hier zu einem erhöhten Verschleiß sowohl der Bolzenbohrung als auch des Kolbenbolzens führt.
Diesen Nachteil des Strandes der Technik zu vermeiden, ist Aufgabe der Erfindung. Diese Aufgabe wird durch die Merkmale des Anspruchs 1 gelöst.

Vorteilhafte Ausgestaltungen der Erfindung sind Gegenstand der Unteransprüche. Ein Ausführungsbeispiel der Erfindung wird im Folgenden anhand der Zeichnungen beschrieben. Es zeigen
- Fig. 1: eine Hälfte eines Kolbens im Schnitt entlang der Kolbenachse und entlang der Bolzenbohrungsachse mit einer ersten Ausgestaltung einer Eindrehung,
- Fig. 2: eine Hälfte des Kolbens im Schnitt entlang einer Ebene, die auf der Kolbenachse liegt und senkrecht auf der Bolzenbohrungsachse steht und
- Fig. 3: eine Vergrößerung des Ausschnitts "A" aus Fig. 1 mit einer zweiten Ausgestaltung der Eindrehung.

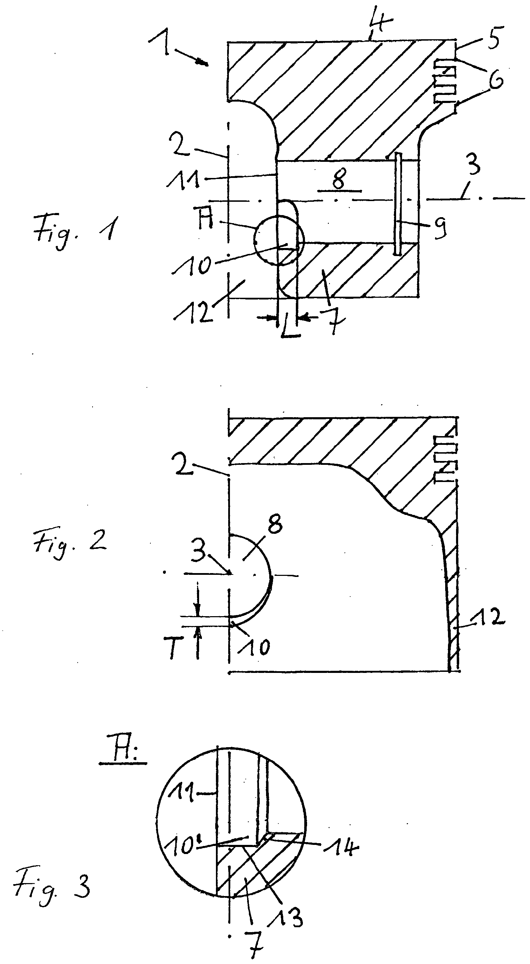

Fig. 1 zeigt eine Hälfte eines Kolbens 1 für einen Verbrennungsmotor im Schnitt entlang einer Ebene, die von der Kolbenachse 2 und der Bolzenbohrungsachse 3 aufgespannt wird. Der Kolben 1 weist einen Kolbenboden 4, einen radial außen sich daran anschließenden Feuersteg 5 und eine sich in kolbenbodenabgewandte Richtung an den Feuersteg 5 anschließende Ringpartie 6 auf.
Weiterhin weist der Kolben 1 sich in kolbenbodenabgewandte Richtung an die Ringpartie 6 anschließende Bolzennaben 7 mit je einer Bolzenbohrung 8 auf. Zu erkennen ist auch die im radial äußeren Bereich der Bolzenbohrung 8 angeordnete Bolzensicherungsnut 9. Bei der Lage der Schnittebene gemäß Fig. 1 ist der Kolbenschaft 12, der die beiden Bolzennaben 7 miteinander verbindet, nur in Draufsicht zu erkennen.
Radial innen ist in den Bereich des Äquators und des Nadirs der Wand der Bolzenbohrung 8 eine Eindrehung 10 eingeformt, die radial innen bis zur Stirnseite 11 der Bolzennabe 7 reicht, und die in der unteren Hälfte der Bolzenbohrung 8 angeordnet ist. In einer ersten Ausgestaltung gemäß Fig. 1 sind die Eindrehungen 10 kreiszylindrisch mit einer parallel zur Bolzenbohrungsachse 3 liegenden Zylinderachse ausgebildet und haben im Schnitt die Form einer Treppenstufe.

Fig. 2 zeigt eine Hälfte des Kolbens im Schnitt entlang einer Ebene, die auf der Kolbenachse 2 liegt und senkrecht auf der Bolzenbohrungsachse 3 steht. Zu erkennen ist der Kolbenschaft 12, die Bolzenbohrung 8 und die im unteren Bereich der Bolzenbohrung 8 angeordnete Eindrehung 10. Hierbei kann die Eindrehung 10 eine Länge "L" zwischen 0,5 mm und 3 mm und eine Tiefe "T" zwischen 0,05 mm und 0,3 mm aufweisen.

Fig. 3 zeigt einen vergrößerten Ausschnitt "A" aus Fig. 1, der eine zweite Ausgestaltung der Eindrehung 10' erkennen lässt. Diese weist einen radial inneren, bis zur radial inneren Stirnseite 11 der Bolzennabe 7 reichenden, kreiszylindrischen und mit ihrer Zylinderachse parallel zur Bolzenbohrungsachse 3 liegenden Bereich 13 und einen radial äußeren, konisch ausgebildeten Bereich 14 auf, dessen Konizität sich nach radial innen öffnet.

Der Kolben 1 kann aus Aluminium, Gusseisen oder Stahl bestehen und durch Gießen oder Schmieden hergestellt sein. Die Eindrehung 10, 10' wird mittels einer Drehmaschine hergestellt, bei der die Achse des Drehmeißels verschiebbar ist. Bei der Herstellung der Eindrehung 10, 10' ist die Achse des Drehmeißels zunächst identisch mit der Bolzenbohrungsachse 3 und wird dann im Laufe des Ausformens der Eindrehung 10, 10' um die Strecke "T" in kolbenbodenabgewandte Richtung nach unten bewegt.

Alternativ dazu kann vor und nach der Bearbeitung der Bolzenbohrung 8 mit Hilfe eines ersten Drehmeißels die Eindrehung 10, 10' mit Hilfe eines zweiten Drehmeißels eingebracht werden, der um eine zur Bolzenbohrungsachse 3 parallele liegenden und von der Bolzenbohrungsachse 3 den Abstand "T" aufweisenden Achse gedreht wird.

Im Motorbetrieb wird zu Beginn des Ansaugtaktes der Kolben 1 über den Kolbenbolzen von der Pleuelstange nach unten gezogen, wobei wegen der Massenträgheit des Kolbens bei höheren Drehzahlen von der Pleuelstange auf den Kolbenbolzen eine derartige Kraft ausgeübt wird, dass sich der Kolbenbolzen nach unten verbiegt. Der Kolbenbolzen kommt hierbei in Kontakt mit der inneren unteren Kante der Bolzenbohrung 8, was zu einer Beschädigung des Kolbenbolzens und zu Rissen im Kolbenmaterial nahe der inneren unteren Kante der Bolzenbohrung 8 führt.

Weist die Bolzenbohrung 8 in ihrem inneren unteren Bereich eine Eindrehung 10, 10' gemäß der vorliegenden Erfindung auf, liegt der innere Teil des sich verbiegenden Kolbenbolzens zu Beginn des Ansaugtaktes auf zwei Kanten auf, auf die sich die vom Kolbenbolzen auf den inneren unteren Bereich der Bolzenbohrung 8 ausgeübte Druckbelastung verteilt, sodass hierdurch die Gefahr stark abnimmt, dass der Kolbenbolzen und der Kolben im Bereich der inneren unteren Kante der Bolzenbohrung beschädigt werden.

Weiterhin bietet die Eindrehung 10, 10' den Vorteil, dass über die Eindrehung der Zugang des Öl in die Bolzenbohrung 8 erleichtert wird, sodass hierdurch die Schmierung des Kolbenbolzens verbessert wird.

Ein weiterer Vorteil der Erfindung ergibt sich aus der Tatsache, dass beim Verdichtungs- und Arbeitstakt über den Zenit der Bolzenbohrung ein großer Druck auf den oberen Teil des Kolbenbolzens ausgeübt wird. Um diesen Druck/pro Fläche so weit wie möglich zu reduzieren und damit den Verschleiß des Kolbenbolzens und der Bolzenbohrung im Zenitbereich so weit wie möglich zu verringern, sollte die Kontaktfläche zwischen dem Zenit der Bolzenbohrung und dem oberen Teil des Kolbenbolzen so groß wie möglich sein.

Aus diesem Grund befindet sich die Eindrehung 10, 10' in der unteren Hälfte der Bolzenbohrung 8, sodass die gesamte Zenitfläche der Bolzenbohrung mit dem Kolbenbolzen in Kontakt treten kann und sich damit ein minimaler Verschleiß des Zenits der Bolzenbohrung 8 und des oberen Teils des Kolbenbolzens ergibt.

### Bezugszeichenliste

- L: Länge der Eindrehung 10, 10'
- T: Tiefe der Eindrehung 10, 10'
- A: Bildausschnitt
- 1: Kolben
- 2: Kolbenachse
- 3: Bolzenbohrungsachse
- 4: Kolbenboden
- 5: Feuersteg
- 6: Ringpartie
- 7: Bolzennabe
- 8: Bolzenbohrung
- 9: Bolzensicherungsnut
- 10, 10': Eindrehung
- 11: Stirnseite
- 12: Kolbenschaft
- 13: vorderer Bereich der Eindrehung 10'
- 14: hinterer Bereich der Eindrehung 10'

## Patentansprüche

1. Kolben (1) für einen Verbrennungsmotor
- mit einem Kolbenboden (4), an den sich radial außen in kolbenbodenabgewandte Richtung eine Ringpartie (6) anschließt,
- mit zwei einander gegenüberliegenden und in kolbenbodenabgewandte Richtung an den Kolbenboden (4) angeformten Bolzennaben (7) mit je einer Bolzenbohrung (8) zur Aufnahme eines Kolbenbolzens und
- mit einem die Bolzennaben (7) miteinander verbindenden Kolbenschaft (12),
- wobei in die radial inneren Bereiche der unteren, kolbenbodenabgewandten Hälften der Bolzenbohrungen (8) je eine Eindrehung (10, 10') eingeformt ist,
**dadurch gekennzeichnet, dass**
die Eindrehungen (10) kreiszylindrisch mit einer parallel zur Bolzenbohrungsachse (3) liegenden Zylinderachse ausgebildet sind und im Schnitt die Form einer Treppenstufe aufweisen.

2. Kolben (1) für einen Verbrennungsmotor nach Anspruch 1, **dadurch gekennzeichnet, dass** die Eindrehungen (10) jeweils einen radial inneren, bis zur radial inneren Stirnseite (11) der Bolzennabe (7) reichenden, kreiszylindrischen und mit ihrer Zylinderachse parallel zur Bolzenbohrungsachse (3) liegenden Bereich (13) und einen radial äußeren, konisch ausgebildeten Bereich (14) aufweisen, dessen Konizität sich nach radial innen öffnet.

3. Kolben (1) für einen Verbrennungsmotor nach Anspruch 1, **dadurch gekennzeichnet, dass** die Eindrehungen (10) jeweils einen radial inneren, bis zur radial inneren Stirnseite (11) der Bolzennabe (7) reichenden, kreiszylindrischen und mit ihrer Zylinderachse parallel zur Bolzenbohrungsachse (3) liegenden Bereich (13) aufweist, der mit weich und stetig verlaufenden Übergangsradien an die Oberfläche der Bohrung (8) anschließt.

4. Kolben (1) für einen Verbrennungsmotor nach einem der vorhergehenden Ansprüche, **dadurch gekennzeichnet, dass** die in Richtung der Bolzenbohrungsachse (3) gemessene Länge "L" der Eindrehung (10, 10') zwischen 0,5 mm und 3 mm beträgt, und dass die senkrecht zur Bolzenbohrungsachse (3) gemessene Tiefe "T" der Eindrehung (10, 10') zwischen 0,05 mm und 0,3 mm beträgt.

## Claims

1. Piston (1) for an internal combustion engine,
- having a piston head (4), followed radially on the outside, in the direction facing away from the piston head, by a ring belt (6),
- having two pin bosses (7), formed on the piston head (4) in the direction facing away from the piston head, which lie opposite one another and each having a pin bore (8) for mounting a piston pin and
- having a piston skirt (12) that connects the pin bosses (7) to one another,
- wherein a turned groove (10, 10') is formed in each of the radially inner areas of the lower halves of the pin bores (8), facing away from the piston head,
**characterised in that**
the turned grooves (10) are configured to be circular-cylindrical, with a cylinder axis that is parallel to the pin bore axis (3) and have the form of a step in cross-section.

2. Piston (1) for an internal combustion engine according to claim 1, **characterised in that** the turned grooves (10) each have a radially inner region (13) which extends all the way to the radially inner face side (11) of the pin boss (7), is circular-cylindrical and parallel to the pin bore axis (3) with its cylinder axis, and have a conically designed radially outer region (14), the conicity of which opens radially inward.

3. Piston (1) for an internal combustion engine according to claim 1, **characterised in that** the turned grooves (10) each have a radially inner region (13) which extends all the way to the radially inner face side (11) of the pin boss (7), is circular-cylindrical and parallel to the pin bore axis (3) with its cylinder axis, which follows the surface of the bore (8) with gently and constantly running transition radii.

4. Piston (1) for an internal combustion engine according to any of the preceding claims, **characterised in that** the length "L" of the turned groove (10, 10'), measured in the direction of the pin bore axis (3), is between 0.5 mm and 3 mm, and **in that** the depth "T" of the turned groove (10, 10'), measured perpendicular to the pin bore axis (3), is between 0.05 mm and 0.3 mm.

## Revendications

1. Piston (1) pour un moteur à combustion interne,
- avec un fond de piston (4), auquel se raccorde, côté extérieur radialement, dans une direction opposée au fond de piston, une partie formant segment (6),
- avec deux moyeux de boulon (7) se faisant face l'un l'autre et formés au niveau du fond de piston (4) dans une direction opposée au fond de piston avec respectivement un alésage de boulon (8) servant à recevoir un boulon de piston, et
- avec une tige de piston (12) reliant entre eux les moyeux de boulon (7),
- dans lequel respectivement une gorge (10, 10') est pratiquée dans les zones radialement intérieures des moitiés inférieures, opposées au fond de piston, des alésages de boulon (8),
**caractérisé en ce que**
les gorges (10) sont réalisées de manière cylindrique circulaire avec un axe de cylindre situé de manière parallèle par rapport à l'axe d'alésage de boulon (3) et présentent, dans la coupe, la forme d'une marche d'escalier.

2. Piston (1) pour un moteur à combustion interne selon la revendication 1, **caractérisé en ce que** les gorges (10) présentent respectivement une zone radialement intérieure (13) parvenant jusqu'au côté frontal (11) radialement intérieur du moyeu de boulon (7), cylindrique circulaire et située de manière parallèle par rapport à l'axe d'alésage de boulon (3) par son axe cylindrique et une zone radialement extérieure (14) réalisée de manière conique, dont la conicité s'ouvre vers l'intérieur radialement.

3. Piston (1) pour un moteur à combustion interne selon la revendication 1, **caractérisé en ce que** les gorges (10) présentent respectivement une zone radialement intérieure (13) parvenant jusqu'au côté frontal (11) intérieur du moyeu de boulon (7), cylindrique circulaire et située de manière parallèle par rapport à l'axe d'alésage de boulon (3) par son axe cylindrique, qui se raccorde à la surface de l'alésage (8) avec des rayons de transition s'étendant de manière souple et constante.

4. Piston (1) pour un moteur à combustion interne selon l'une quelconque des revendications précédentes, **caractérisé en ce que** la longueur « L », mesurée dans la direction de l'axe d'alésage de boulon (3), de la gorge (10, 10') est entre 0,5 mm et 3 mm, et que la profondeur « T », mesurée de manière perpendiculaire par rapport à l'axe d'alésage de boulon (3), de la gorge (10, 10') est entre 0,05 mm et 0,3 mm.
